# EUROPEAN PATENT APPLICATION

(11) **EP 4 733 873 A1**
(43) Date of publication of application: **29.04.2026**
(21) Application number: 25200796.8
(22) Date of filing: 08.09.2025
(51) Int. Cl.: G05B 23/02, G06F 11/07, G06N 5/02

(54) **METHOD FOR DETERMINING THE FAILURE PROBABILITY OF A COGNITIVE DECISION SYSTEM**

(30) Priority: 01.10.2024 DE 102024209606
(71) Applicant: Siemens Aktiengesellschaft, 80333 München (DE)
(72) Inventor: Kaukewitsch, Christof, 81739 München (DE); Kilian, Lennart, 80997 München (DE); Rothbauer, Stefan, 80997 München (DE); Rößner, Simon, 80997 München (DE); Schönhaar, Hannes, 80997 München (DE)
(74) Representative: Siemens Patent Attorneys

(57) **Abstract**

The invention relates a method for determining the failure probability of a cognitive decision system (S) having at least one component (Al, DC) with at least two input channels (A, B). The method comprises:
- performing (S1) a fault tree analysis (FT) for determining the failure probability of the cognitive decision system (S), wherein the fault tree analysis (FT) uses a fault tree algorithm using a dynamic AND/OR element (DE) modelling the component (AI) of the cognitive decision system (S), wherein the dynamic AND/OR element (DE) receives as a first and second input the signals of the two input channels (A, B) and receives context information (ODD, SP) of the cognitive decision system (S) as an additional input, wherein the dynamic AND/OR element (DE) acts as an AND gate or an OR gate depending on the context information (ODD, SP) of the cognitive decision system (S), and
- outputting (S2) the determined failure probability of the cognitive decision system (S).

## Description

The present invention relates to a method for determining the failure probability of a cognitive decision system. Moreover, the invention relates to a device for determining the failure probability of a cognitive decision system. Further, the invention relates to a computer program product comprising a program code for executing a method for determining the failure probability of a cognitive decision system.

For cognitive systems, e. g. based on Al/ML, decisions are frequently highly complex. When using such cognitive systems, in particular in safety-relevant or safety-critical environments such as industrial applications or mobile applications, it is important to understand the logic overall behavior of the decision-making process. This decision-making process is typically dependent on external factors.

Until now, FTA (fault tree analysis) methods are used to determine the fault probability of systems, for example object detection systems. However, the classic top-down FTA methods lack the capability to describe the variability of the dependency which is present in cognitive systems using Al components. This is due to the fact that for complex cognitive systems on a functional and performance level, there is no ab initio definition of failure. The overall system is more than its parts, and the complexity of the task prevents a simple break down of system level function and performance to its parts and components. Thus, for complex cognitive systems, at this point in time, failure can only be defined via the final impact on system-level in a specific environmental situation. For example, a failed obstacle detection might be blamed to the insufficient quality of a sensor output, or vice versa to the inability of the decision algorithm to properly deal with such low-quality sensor signals. I.e. there is no ab initio rule how to assign the responsibility for failing. As a contrasting example, in the area of hardware, a failed hardware shows a deviation from its specifications, providing a clear picture of failure at a part and component level. Thus, in the case of systems using only hardware components, the impact-oriented definition of failure is not required.

There exist some analysis methods to determine the logic structure of a system behavior from a safety point of view: FTA (classic), Component FTA, RBDs (reliability block diagram) and Probabilistic Bayesian networks. All of these methods do not adequately deal with dependency of the definition of component failure on external factors including different operating conditions.

A solution could be to build individual analyses (a manual approach) for each possible variation, but in practice for the systems described above, the variability is simply too big to be covered by manual analysis. Another approach would be to incorporate all these external conditions into the analysis, which would also result in inacceptable effort as well as obfuscation of the actual failure behavior.

If an executable model or implementation of the system is available, simulative methods might be used to obtain the distribution of the systems responses, but the internal logic structure is not available. From a safety point of view, e. g. for safety cases, the understanding of the logical structure is required to argue that the system is sufficiently safe. I.e. the black-box nature of such simulative approaches limits their ability to assure oneself of the built-in safety properties.

It should be noted that independent of the grammatical term usage, individuals with male, female or other gender identities are included within the term.

Thus, it is one object of the present invention to provide an approach to determine a failure probability of a cognitive decision system with a sufficient reliability and considering the context of the cognitive decision system to be usable also for safety-relevant applications.

According to a first aspect, a method for determining the failure probability of a cognitive decision system having at least one component with at least two input channels is provided. The cognitive decision system may be for example an object detection system or other kind of detection system. The at least one component may be in particular an Al based component providing a complex decision-making component which cannot be easily mapped by an FTA as currently used.

For providing the failure probability of the cognitive decision system, in particular of such an AI component, the method comprises performing a fault tree analysis for determining the failure probability of the cognitive decision system. In contrast to previous FTA approaches, which used standard OR or AND gates for mapping the system, the here utilized fault tree analysis uses a fault tree algorithm using a dynamic AND/OR element modelling the component of the cognitive decision system. For this, the dynamic AND/OR element receives as a first and second input the signals of the two input channels and in addition receives context information of the cognitive decision system as an additional input. Depending on the context information of the cognitive decision system, the dynamic AND/OR element acts as an AND gate or an OR gate.

An FTA using such a dynamic AND/OR element accommodates the fact that there is a certain amount of variability and uncertainty in view of which function and performance of such function is required for each part and component of the cognitive decision system to form an overall system free from flaws. The dynamic AND/OR element is able to reflect the fact that a given behavior of the component which is modelled by the dynamic element might be perfectly safe under one set of circumstances but might be inadequate in other circumstances.

Thus, the dynamic AND/OR element is used as an additional (new) structure element which extends classic FTAs to generic FTAs. The dynamic AND/OR element is capable to model the internal logic structure of a highly dynamic and context dependent logical structure, for example an Al based component of a cognitive decision system, in a fault-tree context. The context information may be for example system parameters of the component and/or the cognitive decision system and/or may be environmental information of the component and/or the cognitive decision system.

Based on the dynamic AND/OR element and, if existent, standard elements of the fault tree algorithm modelling standard elements of the cognitive decision system, the failure probability of the whole cognitive decision system may be determined.

The result may then be output in a further step of the method.

Based on this outputted failure probability of the whole system, or maybe only a failure probability of the component modelled by the dynamic AND/OR element, the method may adapt the cognitive decision system, for example by adapting the component modelled by the dynamic AND/OR element. Further, the method may deliver and/or output information which can then further be used for example for adapting the cognitive decision system based on desired characteristic of the cognitive decision system. Such a desired characteristic of the cognitive decision system may for example providing a safer system or a more available system. In order to simulate and experiment on the results of a change or adaption of the system, such a characteristic may be mapped to the FTA and the dynamic AND/OR element by switching the functionality of the dynamic AND/OR element from an AND gate (system should be safer) to an OR gate (the system should be more available, resulting probably in a less safe system) or vice versa. The results of such a simulation in the FTA may then be used for the real system.

Thus, the dynamic AND/OR element may be used for indicating the modelled component and its functionality and may also be used for changing the desired characteristic of the cognitive decision system when mapped to the FTA.

When the cognitive decision system has been adapted, the method may repeat performing the fault tree analysis based on the adapted cognitive decision system for determining an updated failure probability. This may be repeated whenever needed.

According to a further embodiment, the fault tree algorithm uses a hierarchic iteration of a plurality of the dynamic AND/OR element, wherein the plurality of the dynamic AND/OR element receives further input channels of the cognitive decision system. Such a hierarchic iteration may be for example reasonable when the cognitive decision system comprises several AI based components which depend on each other, e.g., on Al based component receives the output of another Al component. Thus, the FTA may implement the algorithm using a combination of standard elements (AND gate, OR gate) and dynamic AND/OR elements for modelling a whole cognitive decision system comprising a combination of Al based components and standard hardware components (such as hardware sensors).

According to a further embodiment, before using the dynamic AND/OR element, the method further comprises determining whether the dynamic AND/OR element acts as an AND gate or an OR gate depending on the context information and on validation data.

Thus, the method may determine how much the dynamic AND/OR element behaves like a classic AND gate or like a classic OR gate for a given context (i.e. depending on the context). Assuming that the at least one component is an Al based component, there may also be validation data sets (with known ground truth).

The idea of the dynamic AND/OR element and of the switching between AND and OR functionality is that limitations of one component (one input channel) can be covered up by capabilities of other system components (other input channel). The dynamic AND/OR element used in the method and the corresponding FTA may identify the capabilities of a system component modelled by the dynamic AND/OR element to either provide an elevated integrity (AND-characteristic), or to mend deficiencies of upstream system components (OR-characteristic). The former is its ability to provide dependable information, the latter is its robustness against imperfect information from the respective upstream system parts. In general, this robustness can be achieved by patching insufficient information with information from other sources or time-slices, i.e. by combining the information from the input channels with the context information.

According to a further embodiment, the method further comprises calibrating the dynamic AND/OR gate using data by monitoring the confidence of the output of the dynamic AND/OR gate with respect to the input channels of the dynamic AND/OR gate. By applying data and observing the confidence for the result relative to the confidence of the inputs, it is possible to conclude whether the dynamic AND/OR element is behaving like an AND or an OR gate (in the respective context). The dynamic AND/OR element may be calibrated using the same data than the corresponding Al based component.

Further, the calibration determines a probability and a context indicating the probability of the AND/OR gate acting as an AND gate or as an OR gate with respect to the context. This information may be used for adjusting the functionality of the dynamic AND/OR element.

According to a further embodiment, the dynamic AND/OR element adjusts the ratio between the two input channels based on the context information. Thus, the dynamic AND/OR element may decide based on the context information whether one of the input channels provides a higher reliability or confidence for the current context and may thus adjust the ratio of the input channels accordingly. Further, this information may be used for adjusting the corresponding cognitive decision system as this helps to decide whether one of the input channels is likely to provide reliable and/or confident information or not.

Further, the dynamic AND/OR element adjusts the ratio based on historical and/or statistical data. Such data may correspond to information of a previous behavior of the corresponding Al based component. The data may be for example data sets of the ODD or input space.

The Operational Design Domain (ODD) refers to particular operating context for an automated system (as for example described in https://en.wikipedia.org/wiki/Operational_design_domain). The context can be defined by a set of conditions, e. g. environmental, geographical, time of day etc.

By adjusting the functionality of the dynamic AND/OR element with respect to an AND gate or an OR gate and with respect to the ratio of the input channels, the dynamic AND/OR element may be used to determine in which work area a given context works. To do this, the behavior of the dynamic AND/OR element modelling the Al based component is monitored when given subsets of the ODD (represented by data, e.g. a part of the validation data set) is examined and compared with an expectation. For example, the expectation may be that the first input channel (e.g. camera) is dominant during the day and when visibility is good, and the second input channel (e.g. lidar) is dominant at night. Based on this, the operating point or working area of the dynamic AND/OR element may be adjusted based on the context.

Such analyses are not possible with previous FTAs because they involve a fixed model of how a component behaves. In contrast, the dynamic AND/OR element may be modelled with freedom and observing how the cognitive decision system behaves in a given context. This can then be displayed in a heat map over a larger data set, for example.

It should be noted that the method steps as described above may be carried out in any suitable order and/or may be carried out at least partially at the same time.

According to a further aspect, a device for determining the failure probability of a cognitive decision system is provided, wherein the cognitive decision system has at least one component with at least two input channels. The device comprises a processing unit for performing a fault tree analysis for determining the failure probability of the cognitive decision system, wherein the fault tree analysis is configured to use a fault tree algorithm using a dynamic AND/OR element modelling the component of the cognitive decision system, wherein the dynamic AND/OR element has a first and second input for receiving the signals of the two input channels and has an additional input for receiving context information of the cognitive decision system, wherein the dynamic AND/OR element acts as an AND gate or an OR gate depending on the context information of the cognitive decision system. The device further comprises an output unit for outputting the determined failure probability of the cognitive decision system.

The embodiments and features described with reference to the method of the present invention apply mutatis mutandis to the device of the present invention.

The respective entity, e.g., the processing unit, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

According to an embodiment, the cognitive decision system is an object detection system. Such an object detection system may comprise a plurality of components, inter alia at least one Al based component as described above. Such an Al based component may receive the output signals of different sensors and may process these signals depending on its own learned algorithm. This may now be reflected by using the dynamic AND/OR element which receives additional context information and is thus able to reflect the behavior of the AI based component by changing between the AND and the OR functionality.

In particular, the at least one component may be an Al based component. This component may for example a detection component receiving the output signal of two sensors.

According to a further embodiment, the output unit is further configured to output information for adjusting the cognitive decision system based on the context information and the output of the dynamic AND/OR element. As described above, the result of the FTA using the dynamic AND/OR element may be used for adjusting the cognitive decision system depending on the context information and depending on a desired characteristic of the cognitive decision system.

In summary, the herein described method and system using the dynamic AND/OR element is suitable to extend classical Fault trees and to allow to model failure propagation within an extended generalized Fault tree. It allows to deal with complex components, e. g. Al-based detector or fusion components, whose internal failure logic changes based on context and use case. The nature of the failure logic may be derived based on data sets similar to those used in the training of ML/Al-based components. Using data sets that reflect use cases of interest, (e. g. which reflect the overall operational profile, critical use case scenarios etc.) failure rates or PFDs (probability of failure on demand) for relevant scenarios can be determined.

According to a further aspect, the invention relates to a computer program product comprising a program code for executing the above-described method for determining the failure probability of a cognitive decision system when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of a device for determining the failure probability of a cognitive decision system;
- Fig. 2: shows a schematic overview of a dynamic AND/OR element used by the device of Fig. 1; and
- Fig. 3: shows a schematic representation of the behavior of the dynamic AND/OR element of Fig. 2.

In the Figures, like reference numerals designate like or functionally equivalent elements, unless otherwise indicated.

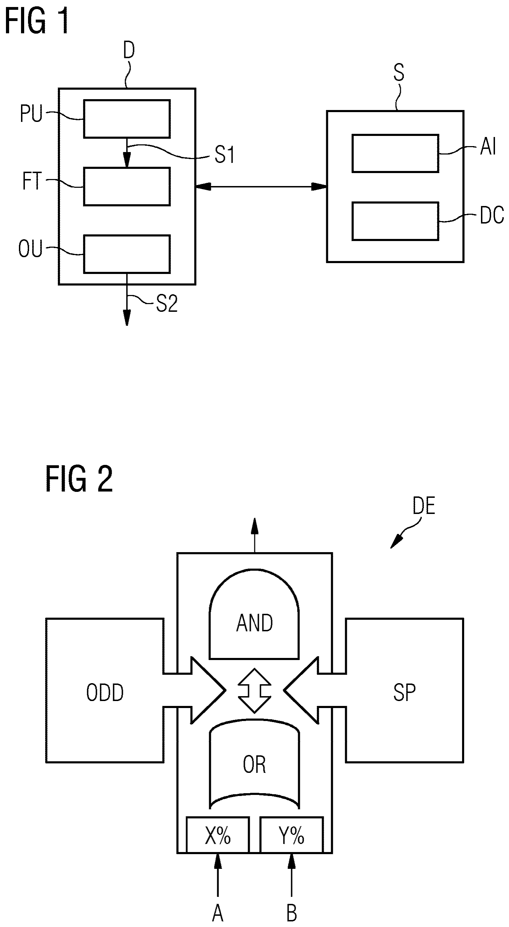

Fig. 1 shows a device D for determining the failure probability of cognitive decision system S. Such a cognitive decision system S may be for example an object detection system. The system S may comprise several components, wherein two components DC, Al are exemplary shown. One of the components may be an Al based component AI. This component AI may receive the output signals of sensors as input channels and may decide based on these signals whether there is an object or not, on the kind of object etc.

For determining the failure probability of the system S, the device D comprises a processing unit PU. This processing unit PU may perform an FTA in step S1 for determining the failure probability. In contrast to previous FTAs, the FTA used herein uses a dynamic AND/OR element DE as shown in Fig. 2. This element DE is able to model the Al based component AI as will be described below in further detail.

After performing the FTA, an output unit OU of the device D outputs (step S2) the result of the FTA, i.e., the failure probability.

The structure of the dynamic AND/OR element DE is shown in Fig. 2. The element (which can be used in a fault tree) is a representation of a planned or implemented sub-system function or system component function processing information from two distinct sources. In this case, the dynamic AND/OR element DE models the component AI of the system S and has two input channels A and B.

Firstly, the dynamic AND/OR element DE may represent whether the information processing of the corresponding component AI yields dependable results, or whether the investigated function of the component AI is robust against missing or flawed input information. The former (dependable results) implies that the represented calculation results are based on agreement of the input information from 'In A' and 'In B' (or substituted by fail-safe values in case of disagreement). This mode of operation is needed in case the consequence of incorrect output is severe. The latter behavior (robustness against missing or flawed information) represents a sub-system, which allows to keep the system operative based on the best of knowledge. This mode of operation is optimal in cases where non-availability is undesired, however, consequences of incorrect outputs can be tolerated.

Secondly, the dynamic AND/OR element DE represents whether the information processing is balanced between the input information from 'In A' and 'In B'. The function of the component AI might be dominated by one input ignoring the second input, or it might show some more equilibrated behavior where either input can have influence on the output. The dynamic AND/OR element DE may also allow to include such balance / imbalance aspects into the fault tree analysis of the device D.

In order to provide such a decision and balancing between the input channels A and B, the dynamic AND/OR element receives context information of the component D and/or the system S. The context information may be for example system parameters SP of the component D and/or the system S, and/or may be ODD/input space data ODD. Depending on the context information SP, ODD, the element DE may decide whether to act as an AND gate or as an OR gate and may also decide on the balancing between the input channels A and B, i.e., with respect to the percentages X and Y contributing to the decision of the component AI.

The dynamic AND/OR element DE can be iterated or stacked allowing to address any number of inputs. This may extend the basic case to practically relevant situations where system behavior is dependent on any number of inputs.

Note that the different input channels might need to be analyzed for their potential to include common cause failures separately. Such common causes will not necessarily be obvious from the here described fault tree analysis. Common causes are application specific and source specific. Additionally, information of the same signal from different time slices might not be completely independent.

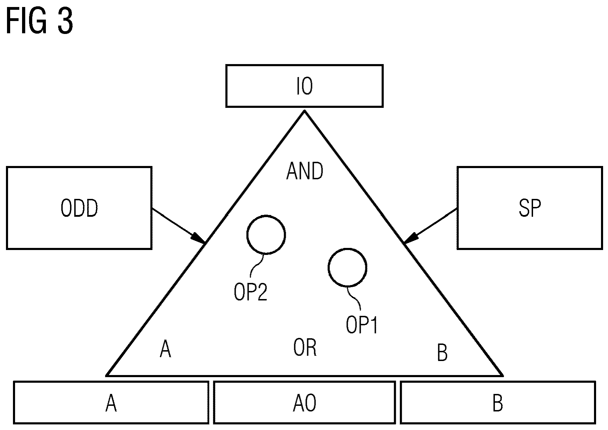

An illustration of what the dynamic AND/OR element DE represents can be done as an isosceles triangular area with the basis facing down and the opposite peak facing up as shown in Fig. 3.

The up-facing peak covers the area where agreement of the input information from 'In A' and 'In B' is required to achieve a dependable output. The down-facing basis ranges from one edge where the outputs are mostly dominated by the information from 'In A' to the third edge where the outputs are mostly dominated by the information from 'In B'. The middle of the basis represents the cases where the input information from 'In A' and 'In B' are equally relevant for the determination of the output values.

The characterization of a dynamic AND/OR element-element in the generalized fault tree can be done in a qualitative way, by inserting expert judgments into the context information ODD and SP or into the percentage X and Y of the input channels.

In the following list the term insufficient is used in case a deviation from an ideal behavior is at the origin of an overall system failure, i.e., occurrence of a top event in the here used fault tree.

The dynamic AND/OR element DE triangle of Fig. 3 reflects the four essential operating points:
- The operating point where an insufficient output signal, is only generated in case both signals A and B are classified as insufficient as well. (Shown as "AND" area in the triangle and labelled with IO 'Integrity optimized'.)
- The operating point where an insufficient output signal state is set in case either signal A or B are classified as insufficient. (Shown as "OR" area in the triangle and labelled with AO 'Availability optimized'.)
- The operating point where an insufficient output signal is only generated in case signal A classified as insufficient (disregarding the information provided by signal B). (Shown as "A"-area in the triangle and labelled as A under the basis of the triangle 'dominated by channel A'.)
- The operating point where an insufficient output signal is only generated in case signal B classified as insufficient (disregarding the information provided by signal A). (Shown as "B"-area in the triangle and labelled as B under the basis of the triangle 'dominated by channel B'.)

As can be seen in Fig. 3, the operating point of the dynamic AND/OR element DE can be shifted within the triangle dependent on the existing information. As an example, the two operating points OP1 and OP2 are shown, which are a mixture of the above-mentioned operating points.

Following on from the above, it is challenging to define a hard criterium of what is insufficient on a sub-system / component level, i.e. the level of the component AI. In case a particular system component is embedded into a network of other powerful components, an overall system failure will only occur due to quite weak performance of this particular component, because the remaining strong part of the system can recover a lot. Vice versa a component in a weak environment has to perform very well to achieve reasonable overall system performance.

For a though experiment on this issue, in the following a fixed overall system S with a given performance is assumed, which makes use of two sensing and detection channels A and B, as well as a fusion component (component AI) which is supposed to calculate the final output from the signals provided by A and B. In case, a strict definition for channels A and B is chosen to be insufficient, the fusion component AI will have to deal with many scenarios where at least one signal is insufficient. Vice versa if a relaxed definition for channels A and B is chosen to be insufficient, the fusion component AI will see much more situations where both channels would be considered sufficient. Note that the system was not changed, only the definition of sufficient / insufficient was shifted. This implies that also the illustration in the dynamic AND/OR element DE triangle is sensitive to the notion of when an internal signal is considered insufficient or not.

One approach to quantify the extent to which the component AI represented by the dynamic AND/OR element DE behaves as an OR or an AND Gate is the following. Take synchronized Input-Data sets for the detection channels A and B, consisting each of the information "object detected" or "no object detected" together with the confidence in the result of the detection. This is usually available if the detection channels are based on neural networks. Obtain the result of the component AI at the output: final decision whether a relevant detection has been determined together with the confidence in this detection. Depending on the fusion approach, the determination of the confidence in the fused information will differ and is beyond the scope of this application. It usually is available or can be derived by probability-theory, Dempster-Shafer Theory or is provided by the fusion component itself, e. g. if it is also an Al based component. Establish for all correct system results (ground truth is known for the synchronized input data sets) the degree to which the confidence at the output has changed with regard to the confidence at the inputs. If the confidence has increased with regard to the input channels, the component AI and thus the element DE behaves similar to an OR-gate. If it decreases, it behaves like an AND-gate. Using an appropriate (likely application specific) mapping for the relative increase / decrease of confidences to a scale between 0 and 1 (0 = OR-gate to 1 = AND-gate) for each data set in the input data set, the characteristic of the fusion component AI with regard to its failure logic is determined. In this way a histogram / distribution can be derived that classifies the behavior of the fusion component AI. This provides information on the nature of the failure logic of the component AI which was until then not accessible.

The dynamic AND/OR element DE triangle can be used to illustrate the overall characteristics of an algorithm by evaluating a weighted average over all scenarios, which will then yield one point within the triangle. Such an illustration of an operating point OP1, OP2 can also be calculated for partitions of the overall use case, such that differences of the behavior can be compared. For example, daytime behavior might differ from nighttime behavior, because the sensing channel A might profit from daylight (e. g. camera based), while channel B does not care about daylight (e. g. a RADAR detection).

The position of such operating points OP1, OP2 can be determined based on expert judgment as well based on a model of the system, based on simulative calculations, as well as based on test results from the real system. In case the number of partitions of the overall use case is increased to a high number, the resulting operating point can be binned within the triangle. This yields a 2 D histogram, which might be visualized in analogy to a heat-map using color or gray scales. In case the partitions come with different probabilities of occurrence this can also be included in the calculation of such a heat map. A heat map illustration of the dynamic AND/OR element DE triangle can be used to analyze which working points the component AI assumes and if this is acceptable from a failure logic point of view. It also allows to focus more detailed analysis to regions of interest, based on criticality of working points or to analyze the working points of relevant subsets of the ODD (defined by context and input parameters).

Although the present invention has been described in accordance with preferred embodiments, it is obvious for the person skilled in the art that modifications are possible in all embodiments.

### List of Reference

- A, B: input channel
- AI: Al component
- AO: Availability optimized
- D: Device
- DC: Detection component
- DE: Dynamic element
- FT: Fault tree analysis
- IO: Integrity optimized
- ODD: Input space
- OP1, OP2: operating point
- OU: Output unit
- PU: Processing unit
- S: System
- SP: System parameter
- S1-S2: method steps

## Claims

1. A method for determining the failure probability of a cognitive decision system (S) having at least one component (Al, DC) with at least two input channels (A, B), the method comprising:
- performing (S1) a fault tree analysis (FT) for determining the failure probability of the cognitive decision system (S), wherein the fault tree analysis (FT) uses a fault tree algorithm using a dynamic AND/OR element (DE) modelling the component (AI) of the cognitive decision system (S), wherein the dynamic AND/OR element (DE) receives as a first and second input the signals of the two input channels (A, B) and receives context information (ODD, SP) of the cognitive decision system as an additional input, wherein the dynamic AND/OR element (DE) acts as an AND gate or an OR gate depending on the context information (ODD, SP) of the cognitive decision system (S), and
- outputting (S2) the determined failure probability of the cognitive decision system (S).

2. The method according to claim 1, **characterized in that** the method further comprises determining whether the dynamic AND/OR element (DE) acts as an AND gate or an OR gate depending on the context information (ODD, SP) and on validation data.

3. The method according to claim 2, **characterized in** the method further comprises calibrating the dynamic AND/OR gate using data by monitoring the confidence of the output of the dynamic AND/OR gate with respect to the input channels (A, B) of the dynamic AND/OR gate.

4. The method according to claim 2 or 3, **characterized in** the calibration determines a probability and a context indicating the probability of the AND/OR gate acting as an AND gate or as an OR gate with respect to the context.

5. The method according to any one of the preceding claims, **characterized in that** the method further comprises adapting the cognitive decision system (S) based on the determined failure probability and/or desired characteristic of the cognitive decision system (S).

6. The method according to claim 5, **characterized in that** the method further comprises repeating performing the fault tree analysis (FT) based on the adapted cognitive decision system (S).

7. The method according to any one of the preceding claims, **characterized in that** the fault tree algorithm uses a hierarchic iteration of a plurality of the dynamic AND/OR element (DE), wherein the plurality of the dynamic AND/OR element (DE) receives further input channels (A, B) of the cognitive decision system (S).

8. The method according to any one of the preceding claims, **characterized in that** the dynamic AND/OR element (DE) adjusts the ratio between the two input channels (A, B) based on the context information (ODD, SP).

9. The method according to claim 8, **characterized in that** the dynamic AND/OR element (DE) adjusts the ratio based on historical and/or statistical data.

10. The method according to any one of the preceding claims, **characterized in that** the context information (ODD, SP) include environment information (ODD) of the cognitive decision system (S) and/or system parameters (SP) of the cognitive decision system (S).

11. A device for determining the failure probability of a cognitive decision system (S), wherein the cognitive decision system (S) has at least one component (AI, DC) with at least two input channels (A, B), the device comprising:
- a processing unit (PU) for performing a fault tree analysis (FT) for determining the failure probability of the cognitive decision system (S), wherein the fault tree analysis (FT) is configured to use a fault tree algorithm using a dynamic AND/OR element (DE) modelling the component (AI) of the cognitive decision system (S), wherein the dynamic AND/OR element (DE) has a first and second input for receiving the signals of the two input channels (A, B) and has an additional input for receiving context information (ODD, SP) of the cognitive decision system (S), wherein the dynamic AND/OR element (DE) acts as an AND gate or an OR gate depending on the context information (ODD, SP) of the cognitive decision system (S), and
- an output unit (OU) for outputting the determined failure probability of the cognitive decision system (S).

12. The device according to claim 11, **characterized in that** the cognitive decision system (S) is an object detection system.

13. The device according to claim 11 or 12, **characterized in that** the at least one component (AI) is an Al based component.

14. The device according to any one of the claims 11 to 13, **characterized in that** the output unit (OU) is further configured to output information for adjusting the cognitive decision system (S) based on the context information (ODD, SP) and the output of the dynamic AND/OR element (DE).

15. A computer program product comprising a program code for executing the method for determining the failure probability of a cognitive decision system (S) according to any one of the claims 1 to 10, when run on at least one computer.
